# EUROPEAN PATENT APPLICATION

(11) **EP 4 220 919 A1**
(43) Date of publication of application: **02.08.2023**
(21) Application number: 23153307.6
(22) Date of filing: 25.01.2023
(51) Int. Cl.: H02M 1/00, H02M 1/32, H02M 3/158, H02M 3/335, H02P 3/14, H02P 3/18, H02P 3/22

(54) **POWER SUPPLY CIRCUIT AND MOTOR DEVICE**

(30) Priority: 01.02.2022 JP 2022014332
(71) Applicant: OMRON Corporation, Kyoto 600-8530 (JP)
(72) Inventor: NAGANO, Masaaki, Kyoto, 600-8530 (JP); TANINO, Kohei, Kyoto, 600-8530 (JP); WATANABE, Tomonori, Kyoto, 600-8530 (JP)
(74) Representative: HGF

(57) **Abstract**

Provided are a power supply circuit and a motor device, capable of reusing energy of a back electromotive force generated, to improve the energy efficiency. The power supply circuit supplying DC power to a load having an inductance component comprises: a DC bus connected to the load; a charge/discharge circuit connected to the DC bus; a voltage fluctuation detection circuit connected to the DC bus and the charge/discharge circuit, when voltage of the DC bus exceeds a threshold voltage, the voltage fluctuation detection circuit allowing the charge/discharge circuit to be charged with electric charge, based on an electric power supplied from the DC bus; and a booster circuit connected to the DC bus and the charge/discharge circuit, the booster circuit boosting voltage of the charge/discharge circuit to supply charged electric charge through the DC bus to the load; the charge/discharge circuit being charged with energy based on a back electromotive force generated when the load stops, to discharge charged energy when the load operates.

## Description

### TECHNICAL FIELD

The present disclosure relates to a power supply circuit and a motor device.

### BACKGROUND ART

In cases where the load is a device having an inductance component, a back electromotive force generated when the load in operation stops may flow to the circuit in the previous stage and adversely affect it, and therefore techniques for suppressing the influence of the back electromotive force have hitherto been studied. For example, Patent Document 1 discloses a device suppressing the influence of the back electromotive force by consuming the back electromotive force by resistance elements. Patent Document 2 discloses a device utilizing, as a power source for a small-signal circuit, a power source charged with the back electromotive force of a motor.

### CITATION LIST

### PATENT LITERATURE

Patent Document 1: JP 2010-81733 A
Patent Document 2: JP 2006-187058 A

### SUMMARY

### TECHNICAL PROBLEM

By using the technique disclosed in Patent Document 1, the device can suppress the influence of the back electromotive force since, even though the back electromotive force occurs, the resistance elements consume it. In the technique disclosed in Patent Document 1, however, energy of the back electromotive force is converted into heat through consumption by the resistance elements, to generate heat resulting energy loss.

By using the technique disclosed in Patent Document 2, the charging element is charged with a back electromotive voltage of the motor so that the charged voltage can be turned into a constant voltage for supply to a small-signal circuit. In the technique disclosed in Patent Document 2, however, the voltage charged with the back electromotive voltage generated by the motor is used for the small-signal circuit that is a circuit different from the motor, resulting in complicated configuration. Furthermore, the technique disclosed in Patent Document 2 is configured such that the charging element can be used as the power source only when the voltage of the charging element is higher than the voltage of the operating power source, with the result that the available power amount is small relative to the capacity of the charging element.

It is an object of the present disclosure to provide a power supply circuit and a motor device, capable of reusing energy of a back electromotive force generated, to improve the energy efficiency.

### SOLUTION TO PROBLEM

A power supply circuit according to one of embodiments of the present disclosure is a power supply circuit supplying DC power to a load having an inductance component, comprising: a DC bus connected to the load; a charge/discharge circuit connected to the DC bus; a voltage fluctuation detection circuit connected to the DC bus and the charge/discharge circuit, when voltage of the DC bus exceeds a threshold voltage, the voltage fluctuation detection circuit allowing the charge/discharge circuit to be charged with electric charge, based on an electric power supplied from the DC bus; and a booster circuit connected to the DC bus and the charge/discharge circuit, the booster circuit boosting voltage of the charge/discharge circuit to supply charged electric charge through the DC bus to the load; the charge/discharge circuit being charged with energy based on a back electromotive force generated when the load stops, to discharge charged energy when the load operates.

Thus, when the voltage of the DC bus becomes high, the power supply circuit can charge the charge/discharge circuit with energy arising from electric power supplied from the DC bus and release the energy charged. Since the power supply circuit includes the booster circuit, even when the voltage of the charge/discharge circuit is low, energy can be released by raising the voltage by the booster circuit. Accordingly, the power supply circuit can reuse energy of electric power generated and enhance the energy efficiency. The power supply circuit can charge energy derived from the back electromotive force occurring when the load stops and reuse the energy for the operation of the load generating the back electromotive force. In the power supply circuit, the load generating the back electromotive force can be the load for reuse of energy arising from the back electromotive force in one device, a more simplified circuit configuration can be achieved.

In the power supply circuit according to one of the embodiments, the voltage fluctuation detection circuit comprises: a voltage divider circuit regulating voltage of the DC bus into a regulated voltage; a reference power source generating a reference voltage; and an operational amplifier outputting a high signal or a low signal based on a difference between the regulated voltage and the reference voltage; or a comparator comparing the regulated voltage and the reference voltage to output a high signal or a low signal based on result of comparison, wherein the charge/discharge circuit comprises: a capacitor; and a switch connected in series to the capacitor, the switch switching on and off based on the high signal and the low signal output from the operational amplifier or the comparator, and wherein, when the switch is turned on, the capacitor is charged based on voltage of the DC bus.

The power supply circuit can thus switch whether the charge/discharge circuit 23 is to be charged, by allowing the operational amplifier or the comparator to acquire the difference between the predetermined voltage and the voltage arising from the voltage applied by the DC bus or to compare the both voltages. Hence, the power supply circuit need not perform complicated control such as sending a control signal for charging the charge/discharge circuit and can be configured by more simple circuits.

In the power supply circuit according to one of the above embodiments, the load includes a motor.

The power supply circuit can thus supply an electric power to a load that generates a back electromotive force when it stops.

A motor device according to one of the embodiments of the present disclosure comprises: a power supply circuit of any one of the above embodiments; and a motor that is a load supplied with an electric power from the power supply circuit.

The motor device can thus have a simpler configuration owing to the integrated power supply circuit and motor.

### ADVANTAGEOUS EFFECTS

According to the present disclosure, there can be provided a power supply circuit and a motor device, capable of reusing energy of a back electromotive force generated, to improve the energy efficiency.

### BRIEF DESCRIPTION OF DRAWINGS

Fig. 1 is a block diagram showing an example of the configuration of an electric power system according to a first embodiment.
Fig. 2 is a circuit diagram showing an example of the configuration of a power supply circuit of Fig. 1.
Fig. 3 is a block diagram showing an example of the configuration of an electric power system according to a second embodiment.
Fig. 4 is a graph showing an example of the voltage of DC buses of the electric power system of Fig. 3.
Fig. 5 is a circuit diagram showing an example of the configuration of a power supply circuit of Fig. 3.
Fig. 6 is a circuit diagram showing an example of the configuration of a power supply circuit according to a first variant of the second embodiment.
Fig. 7 is a circuit diagram showing an example of the configuration of a power supply circuit according to a second variant of the second embodiment.
Fig. 8 is a block diagram showing an example of the configuration of an electric power system according to a third embodiment.
Fig. 9 is a circuit diagram showing an example of the configuration of a power supply circuit of Fig. 8.
Fig. 10 is a circuit diagram showing an example of the configuration of a power supply circuit according to a variant of the third embodiment.

### DESCRIPTION OF EMBODIMENTS

Embodiments of the present disclosure will now be described with reference to the drawings, in which same reference numerals denote similar configuration elements.

### Application Examples

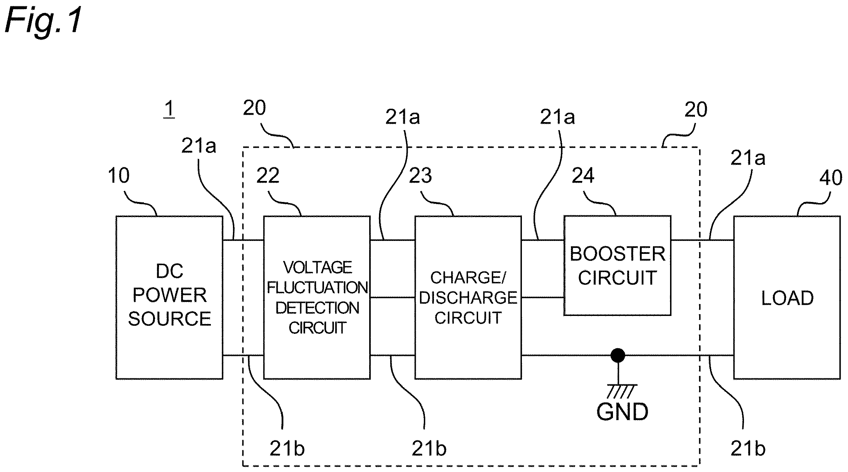

Fig. 1 is a schematic block diagram showing an example of the configuration of an electric power system 1 according to the present disclosure. As shown in Fig. 1, the electric power system 1 includes a DC power source 10, a power supply circuit 20, a load 40, and a control device 50. The power supply circuit 20 includes DC buses 21a and 21b, a voltage fluctuation detection circuit 22, a charge/discharge circuit 23, and a booster circuit 24. The DC buses 21a and 21b are connected to the DC power source 10 and the load 40 to apply a voltage of the DC power source 10 to the load 40. The DC buses 21a and 21b are further connected to the voltage fluctuation detection circuit 22, the charge/discharge circuit 23, and the booster circuit 24. The voltage fluctuation detection circuit 22 is a circuit capable of detecting a fluctuation of the voltage applied through the DC buses 21a and 21b. The charge/discharge circuit 23 includes any charging element and is capable of charging electric charge based on the voltage applied through the DC buses 21a and 21b and discharging the electric charge. The booster circuit 24 can boost the voltage of the charge/discharge circuit 23. The load 40 of the electric power system 1 according to the present disclosure has an inductance component and generates a back electromotive force when it stops. The power supply circuit 20 is configured such that, when the voltage fluctuation detection circuit 22 detects the back electromotive force, the charge/discharge circuit 23 can be charged with electric charge based on the back electromotive force. The power supply circuit 20 allows the booster circuit 24 to boost the voltage of the charge/discharge circuit 23 when the load operates so that charged electric charge in the charge/discharge circuit 23 can be used for activation of the load.

Such a configuration enables the power supply circuit 20 according to the present disclosure to use energy of the back electromotive force generated when the load stops, for the operation of the load. As a result, the power supply circuit 20 can reuse energy of the back electromotive force generated, making it possible to reduce the energy loss to improve the energy efficiency. For example, in case that the load is an actuator servomotor, the servomotor may frequently repeat its operation and stop, resulting in increased opportunity for the back electromotive force to occur. The power supply circuit 20 according to the present disclosure ensures more effective energy reuse when applied to a device or system having a load, like the actuator servomotor, that repeats its operation and stop.

### First Embodiment

The electric power system 1 according to an embodiment of the present disclosure will be described in more detail below.

### Configuration Example of First Embodiment

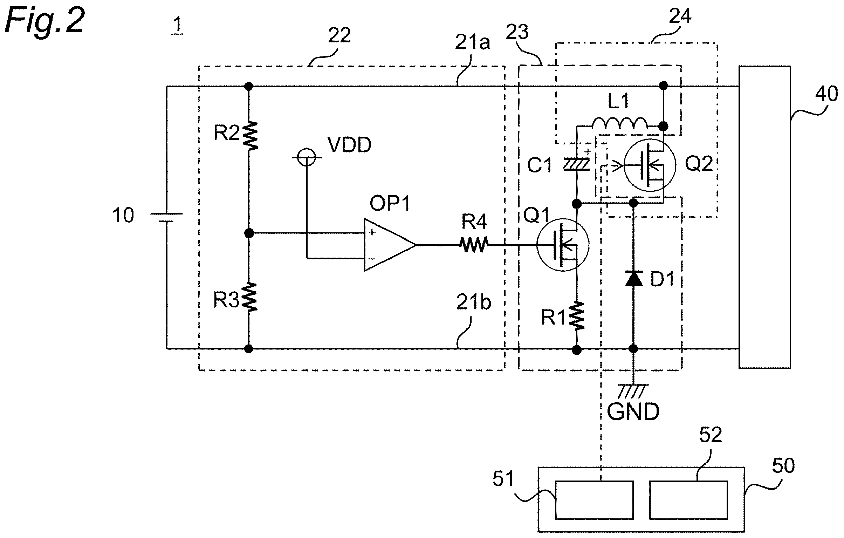

As shown in Fig. 1, the electric power system 1 supplies DC power from the DC power source 10 through the power supply circuit 20 to the load 40. As described above, the electric power system 1 includes the DC power source 10, the power supply circuit 20, the load 40, and the control device 50. The power supply circuit 20 includes the DC buses 21a and 21b, the voltage fluctuation detection circuit 22, the charge/discharge circuit 23, and the booster circuit 24. Fig. 2 is a circuit diagram showing an example of the configuration of the electric power system 1 of Fig. 1. As shown in Fig. 2, the DC bus 21a is connected to the positive side of the DC power source, while the DC bus 21b is connected to the negative side of the DC power source. The DC buses 21a and 21b are connected to the load 40. The voltage of the DC buses 21a and 21b indicates a potential difference between the DC bus 21a and the DC bus 21b.

The DC power source 10 is a power source supplying DC power via the power supply circuit 20 to the load 40. The DC power source 10 may be a power source that includes an AC power source and an AC-DC converter to convert an AC voltage into a DC voltage for supply.

The power supply circuit 20 is configured to supply the DC voltage supplied from the DC power source 10, via the DC buses 21a and 21b, to the load 40. The power supply circuit 20 is configured such that, when a back electromotive force occurs in the load 40, the power supply circuit 20 stores energy of the back electromotive force so that the load 40 can again use the energy.

The voltage fluctuation detection circuit 22 is connected to the DC buses 21a and 21b and the charge/discharge circuit 23. The voltage fluctuation detection circuit 22 is configured such that, when the voltage applied to the DC buses 21a and 21b undergoes a fluctuation from the voltage of the DC power source 10, the voltage fluctuation detection circuit 22 can detect the fluctuation. For example, in this embodiment, the voltage fluctuation detection circuit 22 includes a resistance element R2, a resistance element R3, a resistance element R4, an operational amplifier OP1, and a reference power source VDD.

The resistance element R2 and the resistance element R3 are connected in series. The resistance elements R2 and R3 are hereinafter referred to as a voltage divider circuit. The voltage divider circuit is a circuit with both ends to which the DC voltage is applied, capable of dividing and regulating the DC voltage into a regulated voltage, based on respective resistance components of the resistance elements R2 and R3. When dividing the DC voltage supplied from the DC power source, the voltage divider circuit regulates the divided voltage into a first reference voltage. The regulated voltage is input to a non-inverting input terminal that is an input terminal of the operational amplifier OP1.

The reference power source VDD is a power source capable of generating a voltage of a predetermined value. In this embodiment, the reference power source VDD generates a second reference voltage corresponding to the first reference voltage. The second reference voltage is input to an inverting input terminal that is an input terminal of the operational amplifier OP1.

The operational amplifier OP1 amplifies a difference between the voltages input to the two input terminals, to output a low signal or a high signal from its output terminal. The operational amplifier OP1 may be a comparator that compares the voltages input to the two terminals, to output a low signal or a high signal based on the result of comparison. The operational amplifier OP1 is configured to input at its input terminals the regulated voltage regulated by the voltage divider circuit and the second reference voltage generated by the reference power source VDD. The operational amplifier OP1 outputs a low signal when the difference between the regulated voltage and the second reference voltage is smaller than or equal to a predetermined threshold value, while it outputs a high signal when the difference is greater than the predetermined threshold value. The predetermined threshold value may be zero. In this case, the operational amplifier OP1 outputs a high signal when the regulated voltage is greater than the second reference voltage. Hereinafter, the voltage applied by the DC buses 21a and 21b, which is a threshold value for determination of whether the operational amplifier OP1 outputs a high signal or outputs a low signal, is referred to as a threshold voltage. The operational amplifier OP1 is configured to output a low signal when the first reference voltage and the second reference voltage are input to the input terminals. The output low signal and high signal are input via the resistance element R4 to a switch Q1 that will be described later of the charge/discharge circuit 23. That is, the voltage fluctuation detection circuit 22 is configured to output a high signal to the charge/discharge circuit 23 when the voltage applied by the DC buses 21a and 21b exceeds the threshold voltage.

The charge/discharge circuit 23 is connected to the voltage fluctuation detection circuit 22, the DC buses 21a and 21b, and the booster circuit 24. The charge/discharge circuit 23 is configured such that the charge/discharge circuit 23 can be charged with electric charge based on the voltages applied by the DC buses 21a and 21b when receiving the high signal from the operational amplifier OP1 and discharge the charged electric charge. The charge/discharge circuit 23 includes, for example, a capacitor C1, a switch Q1, a resistance element R1, and a diode D1. The capacitor C1, the switch Q1, and the resistance element R1 are connected in series. One end of the capacitor C1 is connected to the DC bus 21a, and one end of the resistance element R1 is connected to the DC bus 21b. More specifically, one end of the capacitor C1 is connected via an inductance element L1 that will be described later to the DC bus 21a.

The switch Q1 is, for example, a field effect transistor whose gate terminal is connected via the resistance element R4 to the output terminal of the operational amplifier OP1. The switch Q1 is a switch that switches on and off in response to the signal output from the operational amplifier OP1. The switch Q1 turns off when receiving the low signal from the operational amplifier OP1, and turns on when receiving the high signal therefrom. The switch Q1 is arranged between the capacitor C1 and the resistance element R1.

The capacitor C1 has one end connected to the DC bus 21a and the other end connected to the switch Q1. More specifically, one end of the capacitor C1 is connected via the inductance element L1 that will be described later to the DC bus 21a. The capacitor C1 can be charged with electric charge based on the voltage applied to the both ends. The capacitor C1 can discharge the charged electric charge, on the basis of its own both-end voltage based on the charged electric charge and of the voltage applied to the both ends.

The diode D1 has a cathode terminal connected to a connection point between the capacitor C1 and the switch Q1 and an anode terminal connected to the DC bus 21b. As described above, the DC bus 21a is connected to the positive side of the DC power source 10, while the DC bus 21b is connected to the negative side of the DC power source 10. Accordingly, in a closed circuit including the DC power source 10, the DC bus 21a, the capacitor C1, the diode D1, and the DC bus 21b, the capacitor C1 is configured so that the voltage of the DC power source 10 is not applied to the capacitor C1.

The booster circuit 24 is connected to the charge/discharge circuit 23 and the DC bus 21a. The booster circuit 24 is configured to be able to boost the voltage of the charge/discharge circuit 23 and supply the charged electric charge to the load 40. The booster circuit 24 includes, for example, a switch Q2 and the inductance element L1.

The switch Q2 is a switch for boosting the voltage discharged from the capacitor and is connected in parallel to the capacitor C1 and the inductance element L1. The booster circuit 24 boosts a voltage arising from electric charge charged in the capacitor C1, by repeatedly turning on and off the switch Q2, for example, on the basis of a signal received from any processor, to supply electric power to the load 40. The switch Q2 is, for example, a field effect transistor having a source terminal connected to the connection point between the switch Q1 and the capacitor C1 and a drain terminal connected to the inductance element L1 and the DC bus 21a.

The inductance element L1 is, for example, a coil. The inductance element L1 has one end connected to the capacitor C1 and the other end connected to the load 40 and the switch Q2.

The load 40 is a circuit, such as a motor, having an inductance component.

The control device 50 is, for example, a computer that controls the operation of the electric power system 1. The control device 50 includes a processor 51 and a storage device 52.

The processor 51 includes a general-purpose processor like CPU or MPU that implements predetermined functions by executing a program. The processor 51 is configured to be communicable with the storage device 52, to call and execute an arithmetic program, etc. stored in the storage device 52, to thereby implement various processes of the control device 50. For example, the processor 51 can implement a switching process of switching the switch Q2 for boosting the voltage of the capacitor C1. The processor 51 is not limited to a mode implementing predetermined functions through cooperation of hardware resources and software, and may be a hardware circuit dedicatedly designed to implement the predetermined functions. That is, the processor 51 may be implemented by one of various processors such as GPU, FPGA, DSP, ASIC, etc., other than CPU or MPU. Such processor 51 may be in the form of, for example, a signal processing circuit that is a semiconductor integrated circuit.

The storage device 52 is a storage medium capable of storing various pieces of information. The storage device 52 is implemented by, for example, DRAM, SRAM, memory such as flush memory, HDD, SSD, or other storage device, or a proper combination thereof. The storage device 52 stores, as described above, a program for implementing various processes effected through the processor 51 by the control device 50.

### Operation Examples

Operation examples of the electric power system 1 according to this embodiment will be described. In steady state, in the electric power system 1 according to this embodiment, electric power is supplied from the DC power source 10 via the DC buses 21a and 21b to the load 40. At this time, the regulated voltage regulated by the voltage divider circuit of the voltage fluctuation detection circuit 22 is the first reference voltage. Accordingly, the operational amplifier OP1 of the voltage fluctuation detection circuit 22 outputs a low signal to the switch Q1 of the charge/discharge circuit 23. Since in this case the switch Q1 is off, the capacitor C1 of the charge/discharge circuit 23 is not subjected to and is not charged by the voltage of the DC buses 21a and 21b.

Operations of the configuration elements when the electric power system 1 reuses energy will then be described. In steady state, a back electromotive force occurs when the load 40 (e.g. a motor) operating by electric power from the DC power source comes to a stop. As a result, a back electromotive voltage (so-called surge) is applied via the DC buses 21a and 21b to the voltage fluctuation detection circuit 22 and the charge/discharge circuit 23.

The back electromotive voltage generated can be a voltage greater than the voltage supplied from the DC power source 10 to the load 40. Hence, the regulated voltage regulated by the voltage divider circuit of the voltage fluctuation detection circuit 22 is a voltage greater than the first reference voltage. In case that the back electromotive voltage is greater than the threshold voltage, the operational amplifier OP1 outputs a high signal. When the high signal is output, the switch Q1 is turned on. When the switch Q1 turns on, an electric current flows through the switch Q1 so that a voltage is applied to the capacitor C1 based on the voltage of the DC buses 21a and 21b. That is, a back electromotive voltage is applied to the capacitor C1 so that energy based on the back electromotive voltage is charged in the capacitor C1. Thus, the voltage fluctuation detection circuit 22 charges the charge/discharge circuit 23 with energy arising from the back electromotive force supplied to the DC buses 21a and 21b. In consequence, energy of the back electromotive force is stored in the charge/discharge circuit 23.

Subsequently, when the back electromotive voltage becomes smaller than the voltage of the DC power source, it is regulated by the voltage divider circuit, with the result that the regulated voltage input to the operational amplifier OP1 becomes the first reference voltage. The operational amplifier OP1 therefore outputs a low signal to the switch Q1.

When receiving the low signal, the switch Q1 turns off so that no voltage is applied, from the circuit through the switch Q1, to the capacitor C1. Since the diode D1 is connected between the capacitor C1 and the DC bus 21b as described above, the capacitor C1 can release the charged electric charge to supply electric power via the DC buses 21a and 21b to the load 40.

Since the DC buses 21a and 21b are connected to the DC power source 10, the voltage of the DC buses 21a and 21b is equal to the voltage of the DC power source 10. Accordingly, in case that the both-end voltage of the capacitor C1 is smaller than the voltage of the DC power source 10, electric charge charged in the capacitor C1 is not released and electric power stored in the capacitor C1 is not supplied to the load 40.

For this reason, the electric power system 1 according to this embodiment causes the booster circuit 24 to boost the both-end voltage. By raising the both-end voltage to have a voltage value greater than the value of the voltage of the DC power source by the booster circuit 24, the charge/discharge circuit 23 can supply electric power stored in the capacitor C1 to the load 40. For example, if the voltage of the DC power source 10 is 24 V, then the booster circuit 24 can boost the both-end voltage of the capacitor C1 up to 24 V to supply it to the load 40. The boosting can be achieved, for example, by the processor 51 of the control device 50 performing a switching process for the switch Q2 to repeatedly turn on and off the switch Q2.

For example, the electric power system 1 according to this embodiment may be configured to supply energy stored in the capacitor C1 to the load 40 when the load 40 is again operated. This enables energy of the back electromotive force occurring when the load 40 is stopped to be reused when the load 40 consumes energy.

Since the booster circuit 24 boosts the both-end voltage of the capacitor C1 to supply it to the load 40, even if the both-end voltage of the capacitor C1 has a small value, energy stored in the capacitor C1 can be supplied to the load 40. Since the electric power system 1 according to this embodiment allows energy stored in the capacitor C1 to be used irrespective of the magnitude of the voltage of the DC power source 10, energy can be supplied from the capacitor C1. to the load 40 until energy stored in the capacitor C1 reaches zero. Subsequently, when recharging the capacitor C1 with energy derived from the back electromotive force after the load 40 is stopped, the capacitor C1 can store more energy based on the back electromotive force because energy stored in the capacitor C1 is zero.

### Effect of First Embodiment

The power supply circuit 20 according to this embodiment can store in the capacitor C1 energy derived from a back electromotive force occurring at the time of stop of the load 40 having an inductance component, instead of converting the energy into heat by the resistance element or the like for consumption. The power supply circuit 20 can use the energy when the load 40 operates. Thus, according to the power supply circuit 20 of this embodiment, the electric power system 1 renders it possible to suppress heat generation induced by energy occurring when the load 40 stops, energy loss, and electric power input for reoperating the load 40. This leads to curtailment in electric power costs.

The power supply circuit 20 according to this embodiment can make energy stored in the capacitor C1 as small as possible in steady state (i.e. when the load 40 is in operation). It is therefore possible to utilize the amount of energy storable in the capacitor C1 to the maximum and to increase the amount of energy stored in the capacitor C1 based on the back electromotive force caused by the stop of the load 40. This enables the power supply circuit 20 to use a capacitor having less capacity.

The power supply circuit 20 according to this embodiment can charge the charge/discharge circuit 23 with energy derived from the back electromotive force occurring when the load stops, and discharge the charged energy upon the operation of the load 40. In this manner, the power supply circuit 20 can discharge energy to the same load as the load generating the back electromotive force. Thus, by using the power supply circuit 20 according to this embodiment, the circuit scale can be reduced.

The power supply circuit 20 according to this embodiment boosts the voltage of the charge/discharge circuit 23 and supplies energy stored in the charge/discharge circuit 23 to the load 40. In consequence, the power supply circuit 20 can supply energy stored in the charge/discharge circuit 23 to the load 40 even though the voltage of the charge/discharge circuit 23 is lower than the voltage of the DC power source 10. The power supply circuit 20 can make energy stored in the charge/discharge circuit 23 as small as possible after supply to the load 40. Thus, the power supply circuit 20 can utilize the charging capacity of the charge/discharge circuit 23 to the maximum to store energy derived from the back electromotive force occurring when the load 40 again stops.

The power supply circuit 20 according to this embodiment detects by the operational amplifier OP1 whether the back electromotive force occurs in the DC buses 21a and 21b. Specifically, the power supply circuit 20 allows the operational amplifier OP1 to output a high signal or a low signal to the switch Q1 based on the difference between the regulated voltage and the reference voltage, to thereby switch whether to be charged with energy (energy of the back electromotive force) supplied to the DC buses 21a and 21b. Accordingly, the power supply circuit 20 eliminates the need for any control device to send a control signal for control to switch whether to store energy of the back electromotive force, enabling the circuit configuration to be simplified

### Second Embodiment

A power supply circuit according to a second embodiment will hereinafter be described.

### Configuration Example of Second Embodiment

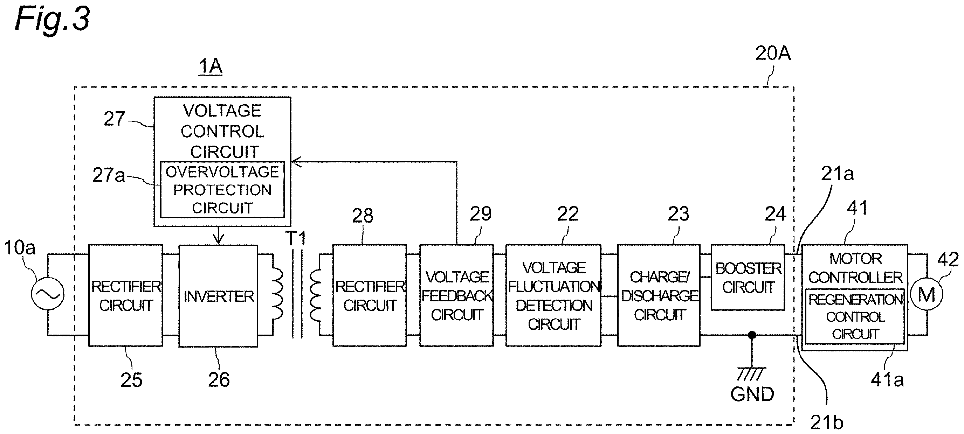

Fig. 3 is a block diagram showing an example of the configuration of an electric power system according to the second embodiment. The electric power system of Fig. 3 includes an AC power source 10a, a power supply circuit 20A, a motor controller 41, a motor 42, and the control device 50.

The AC power source 10a may be, for example, a commercial single-phase or three-phase AC power source.

The power supply circuit 20A receives power supply from the AC power source 10a, to supply DC power to the motor controller 41 and the motor 42 that are loads. The power supply circuit 20A includes, for example, the DC buses 21a and 21b, the voltage fluctuation detection circuit 22, the charge/discharge circuit 23, the booster circuit 24, a rectifier circuit 25, an inverter 26, a voltage control circuit 27, a transformer T1, a rectifier circuit 28, and a voltage feedback circuit 29. The voltage control circuit 27 includes an overvoltage protection circuit 27a.

The rectifier circuit 25 rectifies AC power supplied from the AC power source 10a, into DC power. The inverter 26 is an electric power conversion circuit that is disposed on the primary side of the transformer T1 to convert DC power input from the rectifier circuit 25, into AC power with a specified voltage to supply it to the transformer T1. The voltage control circuit 27 is disposed on the primary side of the transformer T1 to control the output voltage (i.e. voltage applied to a primary winding of the transformer T1) of the inverter 26. In the example of Fig. 3, the overvoltage protection circuit 27a is integrated in the voltage control circuit 27. The overvoltage protection circuit 27a stops power supply from the power supply circuit 20A to the motor controller 41 and the motor 42 when the voltage of the DC buses 21a and 21b exceeds a previously determined overvoltage threshold value. The rectifier circuit 28 rectifies AC power generated in a secondary winding of the transformer T1 to output it to the DC buses 21a and 21b. The voltage feedback circuit 29 is disposed on the secondary side of the transformer T1 to monitor the voltage of the DC buses 21a and 21b. The voltage control circuit 27 and the overvoltage protection circuit 27a acquire the voltage of the DC buses 21a and 21b from the voltage feedback circuit 29. The voltage control circuit 27 controls the output voltage of the inverter 26 so that the voltage of the DC buses 21a and 21b coincides with or approximates to a target voltage V0, based on the voltage of the DC buses 21a and 21b. The voltage fluctuation detection circuit 22 turns on the switch Q1 when the voltage of the DC buses 21a and 21b exceeds a charging threshold value that is higher than the target voltage of the DC buses 21a and 21b and lower than the overvoltage threshold value. The voltage fluctuation detection circuit 22 thereby charges the charge/discharge circuit 23 with electric charge, based on the back electromotive force supplied to the DC buses 21a and 21b, to lower the voltage of the DC buses 21a and 21b. The target voltage corresponds to the voltage of the DC power source 10 in the first embodiment. The other circuits are the same as those of the first embodiment.

The motor controller 41 receives power supply from the power supply circuit 20A to control the operation of the motor 42. The motor 42 may generate regenerative electric power. As described above, the motor 42 may generate a back electromotive force when it stops. The generated regenerative electric power and back electromotive force flow via the motor controller 41 to the DC buses 21a and 21b of the power supply circuit 20A. The motor controller 41 includes a regeneration control circuit 41a that consumes regenerative electric power to lower the voltage of its internal bus (not shown), for example, when the voltage of the internal bus exceeds a previously determined regeneration threshold value due to the regenerative electric power. Although hereinafter, in the second embodiment and embodiments described later, the power supply circuits 20A to 20E operate based on the regenerative electric power, they may operate similarly based on the back electromotive force.

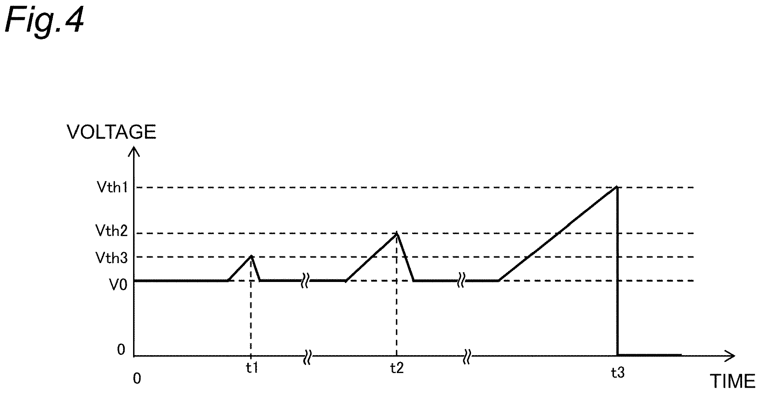

Fig. 4 is a graph showing an example of the voltage of the DC buses 21a and 21b of the electric power system 1A of Fig. 3. V0 shows the target voltage of the DC buses 21a and 21b. The power supply circuit 20A operates so that the voltage of the DC buses 21a and 21b coincides with or approximates to the target voltage V0. Vth1 shows the overvoltage threshold value of the overvoltage protection circuit 27a. Vth2 shows the regeneration threshold value of the regeneration control circuit 41a. Vth3 shows the charging threshold value of the voltage fluctuation detection circuit 22. The charging threshold value corresponds to the threshold voltage of the first embodiment.

When the voltage of the DC buses 21a and 21b exceeds the overvoltage threshold value Vth1 (time t3), as described above, the overvoltage protection circuit 27a stops power supply from the power supply circuit 20A to the motor controller 41 and the motor 42, whereupon the voltage of the DC buses 21a and 21b becomes zero. When the voltage of the internal bus of the motor controller 41 exceeds the regeneration threshold value Vth2 due to the regenerative electric power of the motor 42, the voltage of the DC buses 21a and 21b also exceeds the regeneration threshold value Vth2 (time t2). At this time, as described above, the regeneration control circuit 41a consumes the regenerative electric power to lower the voltage of the internal bus, whereupon the voltage of the DC buses 21a and 21b lowers to the target voltage V0. Since the regeneration threshold value Vth2 has a certain magnitude, the regeneration control circuit 41a does not operate and the voltages of the internal bus and the DC buses 21a and 21b cannot lower until the voltage of the internal bus of the motor controller 41 exceeds the regeneration threshold value Vth2. On the other hand, according to the power supply circuit 20A of Fig. 3, by setting the charging threshold value Vth3 smaller than the regeneration threshold value Vth2, the switch Q1 is turned on promptly in response to the increase in the voltage of the DC buses 21a and 21b so that the capacitor C1 can instantly be charged with the voltage of the DC buses 21a and 21b to lower the voltage.

In the example of Fig. 3, the power supply circuit 20A is configured as an insulated power conversion circuit including the transformer T1.

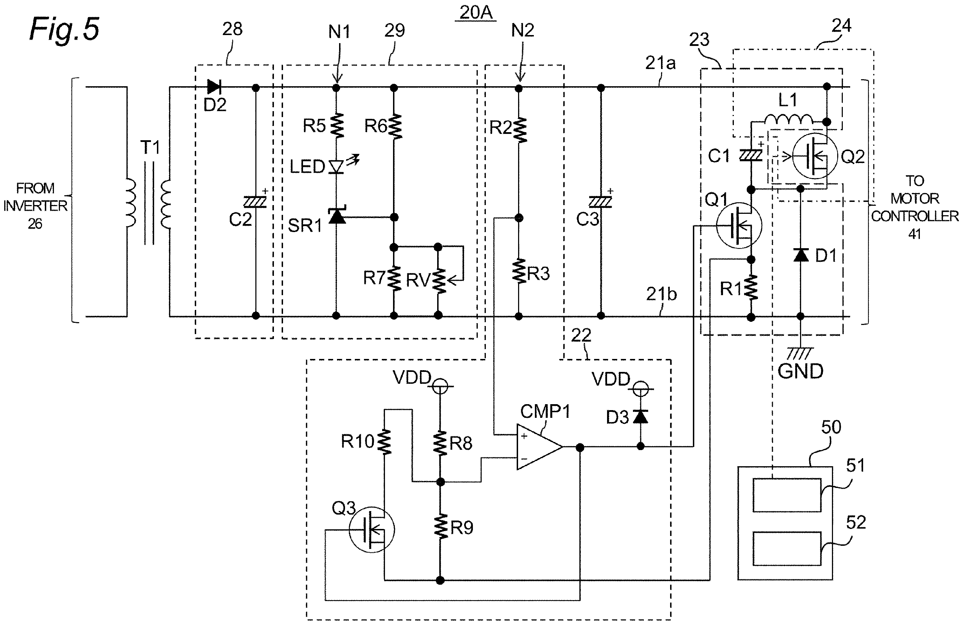

Fig. 5 is a circuit diagram showing an example of the configuration of the power supply circuit 20A of Fig. 3. For simplification of illustration, Fig. 5 shows only the circuits on the secondary side of the transformer T1. The power supply circuit 20A further includes an electrolytic capacitor C3, in addition to the voltage fluctuation detection circuit 22, the charge/discharge circuit 23, the booster circuit 24, the rectifier circuit 28, and the voltage feedback circuit 29, described with reference to Fig. 3.

The rectifier circuit 28 includes a diode D2 and an electrolytic capacitor C2. The diode D2 is connected to the secondary winding of the transformer T1. The electrolytic capacitor C2 is connected across the DC buses 21a and 21b to smooth the voltage rectified by the diode D2.

The voltage feedback circuit 29 includes resistance elements R5 to R7, a variable resistor RV, a shunt regulator SR1, and a light-emitting diode LED. The resistance element R5, the light-emitting diode LED, and the shunt regulator SR1 are connected in series across the DC buses 21a and 21b. The resistance elements R6 and R7 are also connected in series across the DC buses 21a and 21b, with the variable resistor RV being connected in parallel to the resistance element R7. The target voltage of the DC buses 21a and 21b is set depending on the resistance value of the variable resistor RV. The voltage of the DC buses 21a and 21b is divided by the resistance elements R6 and R7 and the variable resistor RV so that the divided voltage is applied to a reference terminal of the shunt regulator SR1. The light-emitting diode LED together with a phototransistor (not shown) disposed in the circuit on the primary side of the transformer T1 make up a photocoupler to notify the voltage control circuit 27 and the overvoltage protection circuit 27a of the voltage of the DC buses 21a and 21b at a node N1.

The electrolytic capacitor C3 is connected across the DC buses 21a and 21b to smooth the voltage of the DC buses 21a and 21b.

The voltage fluctuation detection circuit 22 includes the resistance elements R2 and R3 and resistance elements R8 to R10, a switch Q3, a comparator CMP1, and a diode D3. The resistance elements R2 and R3 are connected in series across the DC buses 21a and 21b, to divide the voltage of the DC buses 21a and 21b at a node N2 to send them to the comparator CMP1. The resistance elements R8 to R10 and the switch Q3 act as a voltage source of the reference voltage corresponding to the charging threshold value Vth3. The switch Q3 is, for example, a field effect transistor. The output terminal of the comparator CMP1 is connected to the gate terminals of the switches Q1 and Q3 by way of example. The comparator CMP1 compares the voltage of the DC buses 21a and 21b divided by the resistance elements R2 and R3 with the charging threshold value Vth3, and turns on the switch Q1 when the voltage of the DC buses 21a and 21b exceeds the charging threshold value Vth3. In the example of Fig. 5, the charging threshold value Vth3 has hysteresis. Since when the switch Q1 turns on, the switch Q3 also turns on simultaneously, the charging threshold value Vth3 changes. For example, when the target voltage V0 of the DC buses 21a and 21b is 48 V, the charging threshold value Vth3 to turn on the switch Q1 is set to 55 V, while the charging threshold value Vth3 to turn off the switch Q1 is set to 50 V.

### Variant of Second Embodiment

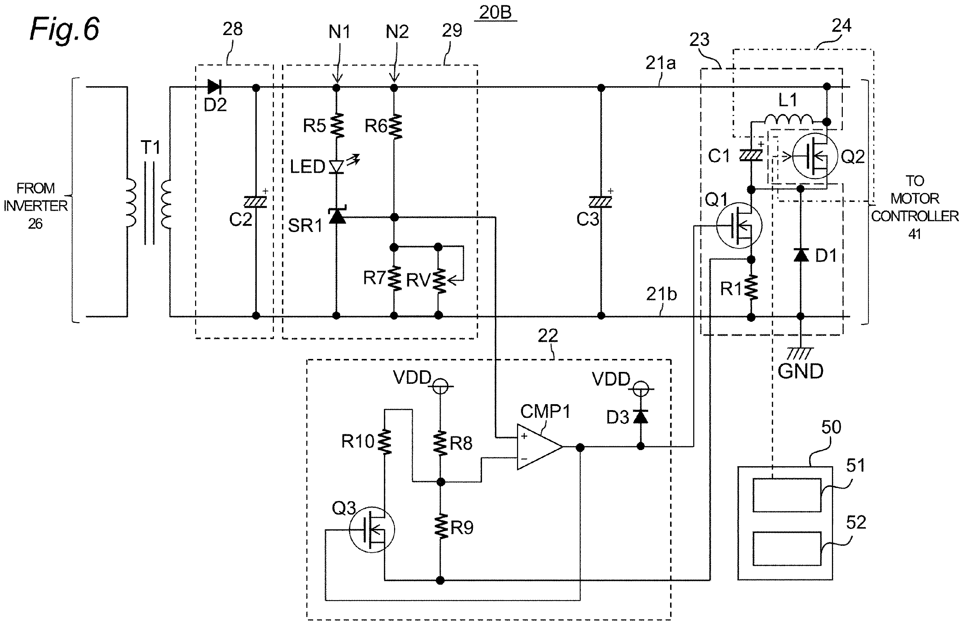

Fig. 6 is a circuit diagram showing an example of the configuration of a power supply circuit 20B according to a first variant of the second embodiment. The power supply circuit 20B has a configuration in which the resistance elements R2 and R3 are excluded from the power supply circuit 20A of Fig. 5. Furthermore, according to the power supply circuit 20B of Fig. 6, the voltage fluctuation detection circuit 22 acquires the voltage of the DC buses 21a and 21b from the voltage feedback circuit 29. Particularly, the voltage fluctuation detection circuit 22 acquires, as the voltage of the DC buses 21a and 21b, voltage of the DC buses 21a and 21b at the node N2 divided by the resistance elements R6 and R7 and the variable resistor RV, that is, voltage applied to the variable resistor RV. The voltage fluctuation detection circuit 22 may be a circuit further including the resistance elements R6 and R7 and the variable resistor RV. The comparator CMP1 compares the voltage applied to the variable resistor RV with the charging threshold value Vth3. As described above, the target voltage V0 of the DC buses 21a and 21b is set depending on the resistance value of the variable resistor RV. According to the power supply circuit 20B of Fig. 6, even if the voltage of the DC buses 21a and 21b changes by varying the resistance value of the variable resistor RV, the voltage input from the voltage feedback circuit 29 to the comparator CMP1 is the same as the voltage before varying the resistance value of the variable resistor RV. Hence, the charging threshold value Vth3 changes equivalently in accordance with the increase/decrease of the target voltage V0 of the DC buses 21a and 21b. According to the power supply circuit 20B of Fig. 6, the voltage fluctuation detection circuit 22 is operable to turn on the switch Q1 when the voltage of the DC buses 21a and 21b reaches a predetermined constant multiple, for example, 1.3 times of the target voltage V0 of the DC buses 21a and 21b, irrespective of the magnitude of the target voltage V0. For example, if the target voltage V0 is 50 V, the voltage fluctuation detection circuit 22 turns on the switch Q1 when the voltage of the DC buses 21a and 21b reaches 65 V. If the target voltage V0 is 55 V, the voltage fluctuation detection circuit 22 turns on the switch Q1 when the voltage of the DC buses 21a and 21b reaches 71.5 V. The charge/discharge circuit 23 can thus be charged with electric power supplied from the DC buses 21a and 21b.

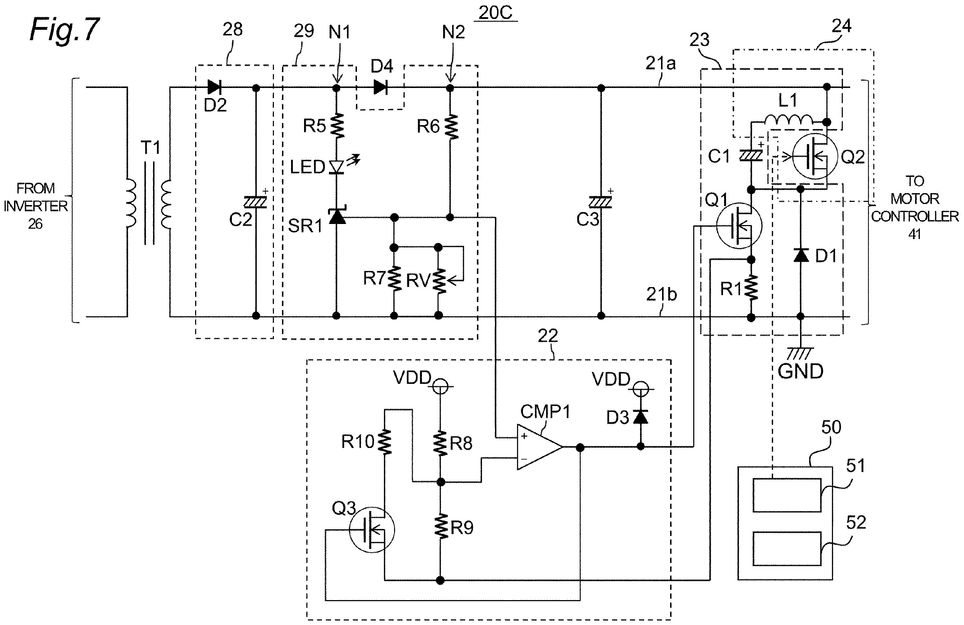

Fig. 7 is a circuit diagram showing an example of the configuration of a power supply circuit 20C according to a second variant of the second embodiment. The power supply circuit 20C includes a diode D4 in addition to the configuration elements of the power supply circuit 20B of Fig. 6. As described above, the overvoltage protection circuit 27a acquires the voltage of the DC buses 21a and 21b at the node N1 from the voltage feedback circuit 29. The voltage fluctuation detection circuit 22 acquires from the voltage feedback circuit 29 the voltage of the DC buses 21a and 21b at the node N2 divided by the resistance elements R6 and R7 and the variable resistor RV. The node N2 is disposed closer to the motor controller 41 than the node N1. The diode D4 is inserted in the DC bus 21a to block current flowing from the node N2 to the node N1. In the configurations of the power supply circuit 20A of Fig. 5 and the power supply circuit 20B of Fig. 6, as described above, there was a need for the power supply circuit 20A and the motor controller 41 to be configured to satisfy Vth1>Vth2 at all times in order to allow the regeneration control circuit 41a to operate without stopping power supply from the power supply circuit 20A to the motor controller 41 and the motor 42. On the other hand, according to the power supply circuit 20C of Fig. 7, since the diode D4 is interposed between the nodes N1 and N2, the voltage at the node N1 cannot rise even though the voltage at the node N2 rises due to the regenerative electric power, thereby preventing the overvoltage protection circuit 27a from erroneously stopping power supply from the power supply circuit 20C to the motor controller 41 and the motor 42. Thus, according to the power supply circuit 20C of Fig. 7, even when Vth1<Vth2, it can be charged with regenerative electric power by using the voltage fluctuation detection circuit 22 and the charge/discharge circuit 23 without stopping power supply from the power supply circuit 20C to the motor controller 41 and the motor 42, allowing the regeneration control circuit 41a to operate. At the operation of the motor 42, the power supply circuit 20C can use energy stored in the charge/discharge circuit 23, by using the booster circuit 24.

In the example of Fig. 7, the voltage control circuit 27 acquires the voltage of the DC buses 21a and 21b at the node N2 from the voltage feedback circuit 29. As described above, the reference terminal of the shunt regulator SR1 is subjected to the voltage of the DC buses 21a and 21b at the node N2 divided by the resistance elements R6 and R7 and the variable resistor RV, which voltage is notified to the voltage control circuit 27 via the photocoupler including the light-emitting diode LED.

### Effect of Second Embodiment

According to the power supply circuits 20A, 20B, and 20C of the second embodiment, it is possible to reduce the fluctuation in the voltage of the DC buses 21a and 21b caused by the regenerative electric power and consumed electric power of the motor 42, to stably keep the voltage of the DC buses 21a and 21b, without increasing the circuit scale to a great extent. According to the power supply circuits 20A, 20B, and 20C of the second embodiment, it is possible to store the regenerative electric power of the motor 42 in the charge/discharge circuit 23, instead of consuming the regenerative electric power, to reuse it when the motor 42 operates, thus enabling improvement in the energy efficiency.

### Third Embodiment

A power supply circuit according to a third embodiment will hereinafter be described.

### Configuration Example of Third Embodiment

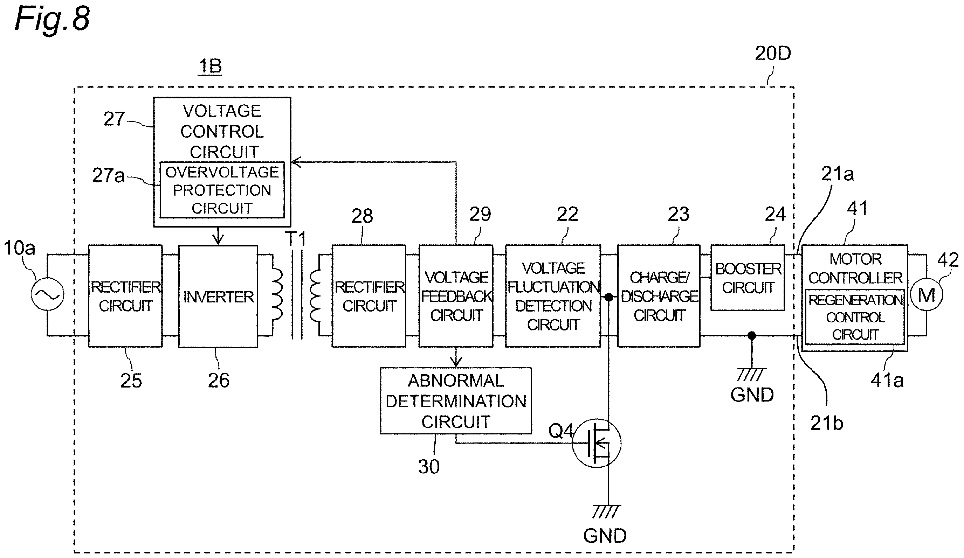

Fig. 8 is a block diagram showing an example of the configuration of an electric power system 1B according to the third embodiment. The electric power system 1B of Fig. 8 includes a power supply circuit 20D in place of the power supply circuit 20A of the electric power system 1A of Fig. 3. The power supply circuit 20D includes an abnormal determination circuit 30 and a switch Q4, in addition to the configuration elements of the power supply circuit 20A of Fig. 3.

The abnormal determination circuit 30 determines an abnormality of the circuit on the primary side of the transformer T1, that is, an abnormality of the inverter 26 or the voltage control circuit 27. The abnormality of the inverter 26 or the voltage control circuit 27 includes occurrence of excessive output voltage from the inverter 26 due to a fault of the inverter 26 or the voltage control circuit 27 or due to a failure of the voltage feedback. The gate of the switch Q1 is grounded via the switch Q4. The abnormal determination circuit 30 turns on the switch Q4 when an abnormality occurs in the inverter 26 or the voltage control circuit 27, to thereby control the switch Q1 to stop charging of electric power of the DC buses 21a and 21b.

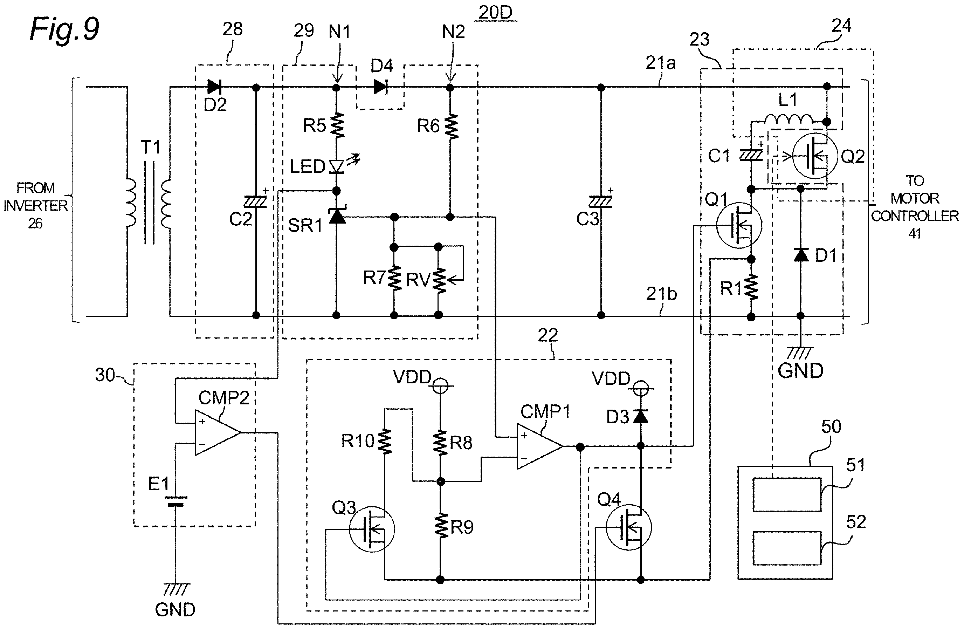

Fig. 9 is a circuit diagram showing an example of the configuration of the power supply circuit 20D of Fig. 8. For simplification of illustration, Fig. 9 shows only the circuits on the secondary side of the transformer T1. The abnormal determination circuit 30 includes a reference voltage source E1 and a comparator CMP2. The comparator CMP2 compares the voltage at any node on the circuits on the secondary side of the transformer T1 with the voltage of the reference voltage source E1, and determines that an abnormality has occurred in the inverter 26 or the voltage control circuit 27 when the voltage of the voltage feedback circuit 29 exceeds the voltage of the reference voltage source E1. In the example of Fig. 9, the comparator CMP2 monitors the voltage at the node N1. When an abnormality occurs in the inverter 26 or the voltage control circuit 27 to bring about an excessive voltage in the circuit on the primary side of the transformer T1, the voltage rises at the node N1 on the circuit on the secondary side of the transformer T1. As described above, since the diode D4 is inserted in the DC bus 21a to block electric current flowing from the node N2 to the node N1, the voltage at the node N1 cannot rise by the regenerative electric power of the motor 42. The other constituent elements of the power supply circuit 20D are the same in configuration as the corresponding constituent elements of the power supply circuit 20C of Fig. 7. In case that the voltage of the DC buses 21a and 21b shows an abnormal rise, if the voltage fluctuation detection circuit 22 turns on the switch Q1, the switch Q1, the capacitor C1, and the resistance element R1 may overheat and be damaged. On the other hand, when the power supply circuit 20D of Fig. 9 determines that an abnormality has occurred in the inverter 26 or the voltage control circuit 27, it turns on the switch Q4 to forcibly turn off the switch Q1. In consequence, even though an abnormality occurs in the inverter 26 or the voltage control circuit 27, the switch Q1, the capacitor C1, and the resistance element R1 can be prevented from overheating.

### Variant of Third Embodiment

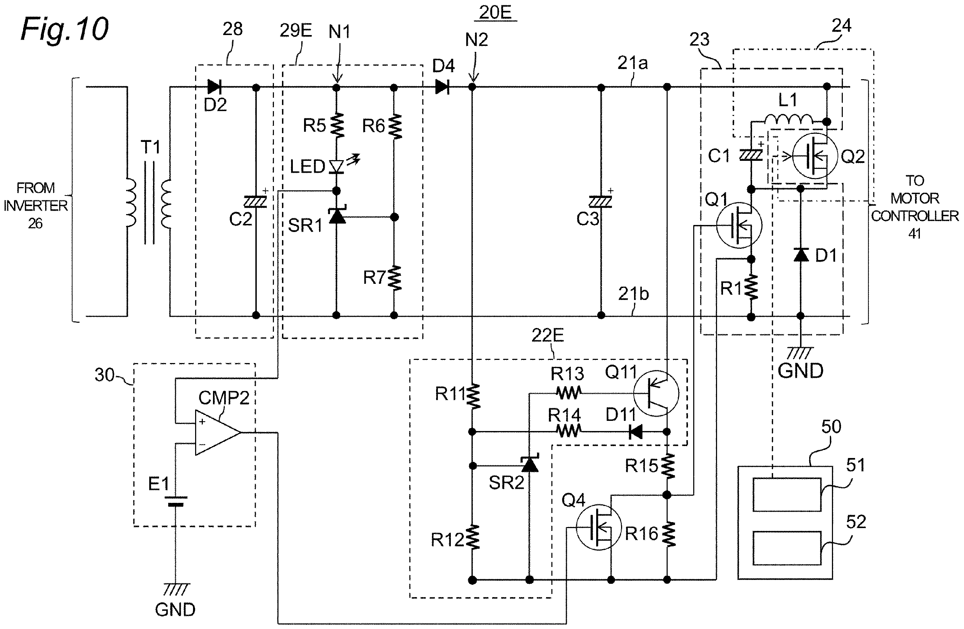

Fig. 10 is a circuit diagram showing an example of the configuration of a power supply circuit 20E according to a variant of the third embodiment. The power supply circuit 20E includes a voltage feedback circuit 29E and a voltage fluctuation detection circuit 22E, in lieu of the voltage feedback circuit 29 and the voltage fluctuation detection circuit 22 of Fig. 9, and further includes resistance elements R15 and R16.

The voltage feedback circuit 29E has a configuration in which the variable resistor RV is removed from the voltage feedback circuit 29 of Fig. 9.

The voltage fluctuation detection circuit 22E includes resistance elements R11 to R14, a shunt regulator SR2, a switch Q11, and a diode D11. The switch Q11 is, for example, a bipolar transistor. The switch Q11 has an emitter connected to the DC bus 21a and a collector grounded via the resistance elements R15, R16, and R1 that are connected in series. A connection point between the resistance elements R15 and R16 is connected to the gate of the switch Q1. A base of the switch Q11 is connected via the resistance element R13 to a cathode of the shunt regulator SR2. The resistance elements R11 and R12 divide the voltage at the node N2 of the DC buses 21a and 21b, applies the divided voltage to a control terminal of the shunt regulator SR2, and applies the divided voltage via the resistance element R14 to a cathode of the diode D11. An anode of the diode D11 is connected to the collector of the switch Q11. When the voltage of the DC buses 21a and 21b rises, the cathode of the shunt regulator SR2 goes to low, turning on the switch Q11. As a result, the gate voltage of the switch Q1 goes high, turning on the switch Q1. The switch Q1 is turned on by the diode D11 and the resistance element R14. The charging threshold value Vth3 has hysteresis.

The diode D4 is inserted in the DC bus 21a to block electric charge flowing from the node N2 to the node N1.

According to the power supply circuit 20E of Fig. 10, disposition of the abnormal determination circuit 30 enables prevention of overheating of the switch Q1, the capacitor C1, and the resistance element R1 even though an abnormality occurs in the inverter 26 or the voltage control circuit 27, similarly to the power supply circuit 20D of Fig. 9.

### Effect of Third Embodiment

According to the power supply circuits 20D and 20E of the third embodiment, similar to the power supply circuits 20A, 20B, and 20C of the second embodiment, it is possible to reduce the fluctuation in the voltage of the DC buses 21a and 21b caused by the regenerative electric power and consumed electric power of the motor 42, to stably keep the voltage of the DC buses 21a and 21b, without increasing the circuit scale to a great extent. According to the power supply circuits 20D and 20E of the third embodiment, the switch Q1, the capacitor C1, and the resistance element R1 can be prevented from overheating even though an abnormality occurs in the inverter 26 or the voltage control circuit 27. According to the power supply circuits 20D and 20E of the third embodiment, it is possible to store the regenerative electric power of the motor 42 in the charge/discharge circuit 23, instead of consuming the regenerative electric power, to reuse the regenerative electric power when the motor 42 operates.

### Other Variants

Although the embodiments of the present disclosure have hereinabove been described in detail, the above description is mere simplifications of the present disclosure in all respects. It is natural that various improvements and modifications be possible to perform without departing from the scope of the present disclosure. For example, changes below are possible. In the following, like reference numerals are imparted to configuration elements similar to those of the above embodiments, and description of the same respects as in the above embodiments will appropriately be omitted. The following variants may properly be combined.

In the examples of Fig. 5, etc., the case has been described where the rectifier circuit 28 is configured as a half-wave rectifier circuit including the one diode D2, the rectifier circuit may be configured as a full-wave rectifier circuit.

The power supply circuit may be configured to receive power supply from the DC power source, instead of the AC power source.

The power supply circuit may be configured as a non-insulated type power conversion circuit not including the transformer.

In the examples of Figs. 3 and 8, the regeneration control circuit 41a is shown integrated in the motor controller 41, the regeneration control circuit 41a may be disposed separately from the motor controller 41.

The power supply circuit may be configured to supply electric power to any load device generating the back electromotive force or the regenerative electric power, without being limited to the motor controller 41 and the motor 42.

The power supply circuit may be configured as a motor device including the motor controller and the motor.

### Summary

The power supply circuit and the motor device according to the embodiments described as above may be configured as follows.

### <First Aspect>

A power supply circuit (20, 20A-20E) supplying DC power to a load (40) having an inductance component, comprises: a DC bus (21a, 21b) connected to the load (40); a charge/discharge circuit (23) connected to the DC bus (21a, 21b); a voltage fluctuation detection circuit (22) connected to the DC bus (21a, 21b) and the charge/discharge circuit (23), when voltage of the DC bus (21a, 21b) exceeds a threshold voltage, the voltage fluctuation detection circuit (22) allowing the charge/discharge circuit (23) to be charged with electric charge, based on an electric power supplied from the DC bus (21a, 21b); and a booster circuit (24) connected to the DC bus (21a, 21b) and the charge/discharge circuit (23), the booster circuit (24) boosting voltage of the charge/discharge circuit (23) to supply charged electric charge through the DC bus (21a, 21b) to the load (40) ; the charge/discharge circuit (23) being charged with energy based on a back electromotive force generated when the load (40) stops, to discharge charged energy when the load (40) operates.

### <Second Aspect>

The power supply circuit (20, 20A-20E) of first aspect, wherein the voltage fluctuation detection circuit (22) comprises: a voltage divider circuit (R2, R3) regulating voltage of the DC bus (21a, 21b) into a regulated voltage; a reference power source generating a reference voltage; and an operational amplifier outputting a high signal or a low signal, based on a difference between the regulated voltage and the reference voltage; or a comparator (OP1) comparing the regulated voltage and the reference voltage to output a high signal or a low signal, based on result of comparison, wherein the charge/discharge circuit (23) comprises: a capacitor (C1); and a switch (Q1) connected in series to the capacitor (C1), the switch (Q1) switching on and off based on the high signal and the low signal output from the operational amplifier or the comparator (OP1), and wherein when the switch (Q1) is turned on, the capacitor (C1) is charged based on voltage of the DC bus (21a, 21b).

### <Third Aspect>

The power supply circuit (20, 20A-20E) of first or second aspect, wherein the load (40) includes a motor (42).

### <Fourth Aspect>

A motor device comprising: a power supply circuit (20, 20A-20E) of any one of first to third aspects; and a motor (42) that is a load (40) supplied with an electric power from the power supply circuit (20, 20A-20E).

The power supply circuit and the motor device described in the present disclosure are implemented by, for example, cooperation of hardware resources, e.g., a processor and a memory, and software resources (computer programs).

## Claims

1. A power supply circuit supplying DC power to a load having an inductance component, comprising:
a DC bus connected to the load;
a charge/discharge circuit connected to the DC bus;
a voltage fluctuation detection circuit connected to the DC bus and the charge/discharge circuit, when voltage of the DC bus exceeds a threshold voltage, the voltage fluctuation detection circuit allowing the charge/discharge circuit to be charged with electric charge, based on an electric power supplied from the DC bus; and
a booster circuit connected to the DC bus and the charge/discharge circuit, the booster circuit boosting voltage of the charge/discharge circuit to supply charged electric charge through the DC bus to the load;
wherein the charge/discharge circuit is charged with energy based on a back electromotive force generated when the load stops, to discharge charged energy when the load operates.

2. The power supply circuit of claim 1, wherein the voltage fluctuation detection circuit comprises: a voltage divider circuit regulating voltage of the DC bus into a regulated voltage; a reference power source generating a reference voltage; and an operational amplifier outputting a high signal or a low signal based on a difference between the regulated voltage and the reference voltage; or a comparator comparing the regulated voltage and the reference voltage to output a high signal or a low signal based on result of comparison,
wherein the charge/discharge circuit comprises: a capacitor; and a switch connected in series to the capacitor, the switch switching on and off based on the high signal and the low signal output from the operational amplifier or the comparator, and
wherein, when the switch is turned on, the capacitor is charged based on voltage of the DC bus.

3. The power supply circuit of claim 1 or 2, wherein the load includes a motor.

4. A motor device comprising:
a power supply circuit of any one of claims 1 to 3; and
a motor that is a load supplied with an electric power from the power supply circuit.
